**Europäisches Patentamt**

**European Patent Office**

**Office européen des brevets**

(19)

(11) Veröffentlichungsnummer : **0 317 757 B1**

(12) # EUROPÄISCHE PATENTSCHRIFT

(45) Veröffentlichungstag der Patentschrift :
**06.03.91 Patentblatt 91/10**

(51) Int. Cl.$^5$ : **F16C 11/06**

(21) Anmeldenummer : **88117309.0**

(22) Anmeldetag : **18.10.88**

(54) **Kugelgelenk.**

(30) Priorität : **25.11.87 DE 3739910**

(43) Veröffentlichungstag der Anmeldung :
**31.05.89 Patentblatt 89/22**

(45) Bekanntmachung des Hinweises auf die
Patenterteilung :
**06.03.91 Patentblatt 91/10**

(84) Benannte Vertragsstaaten :
**DE FR GB IT**

(56) Entgegenhaltungen :
**DE-A- 1 953 000
DE-C- 953 860
US-A- 2 324 984
US-A- 4 552 480**

(73) Patentinhaber : **TRW Ehrenreich GmbH & Co.
KG
Hansa-Allee 190
W-4000 Düsseldorf 11 (DE)**

(72) Erfinder : **Sprenger, Wolfgang
Obere Talstrasse 4
W-4020 Mettmann (DE)**

(74) Vertreter : **Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11 (DE)**

## Beschreibung

Gegenstand der Erfindung ist ein Kugelgelenk insbesondere für Radaufhängungen und Lenkgestänge von Kraftfahrzeugen, mit einem Kugelzapfen, dessen Kugelkopf unter Zwischenlage einer elastischen Lagerschale in einem Gelenkgehäuse allseitig beweglich gelagert ist, wobei die Lagerschale einen am Kugelzapfen anliegenden hülsenförmigen Ansatz aufweist, dessen Rand dichtend gegen ein auf dem Kugelzapfen befestigtes Hebelauge drückt.

Bekannte Kugelgelenke weisen im Bereich zwischen Kugelkopf und der Einspannstelle für das Hebelauge keinen oder nur einen geringen Korrosionsschutz auf. Beispielsweise ist aus der DE-A-19 53 000 ein Kugelgelenk bekannt, bei dem die Lagerschale aus einem elastischen Werkstoff, insbesondere Polyurethan-Kunststoff besteht und mit einer Dichtungsmanschette den Kugelzapfenhals teilweise umschließt. Bereiche des Kugelzapfenhalses und die am Kugelzapfenkonus befindliche Einspannstelle für das Hebelauge sind jedoch ungeschützt und demzufolge korrosionsgefährdet. Ferner neigt die Durchtrittsöffnung der Dichtungsmanschette für den Kugelzapfen dazu, sich beim Verschwenken des Kugelzapfens auf diesem schräg zu stellen und eine ovale Form anzunehmen. Hierdurch kann die Dichtwirkung der Dichtmanschette herabgemindert werden.

Aus der US-A-43 86 869 ist aus der Fig. 3 ein Kugelgelenk mit einer Lagerschale bekannt, die an einer Stirnseite von einem Dichtring aus einem Elastomer abgestützt ist, wobei an den Dichtring ein Dichtungsbalg angeformt ist, der mit einer Dichtlippe im Übergangsbereich von Kugelzapfenhals und Kugelzapfenkonus anliegt. Durch diese aufwendige Konstruktion wird zwar die Gefahr von Undichtigkeiten im Bereich der Öffnung des Dichtungsbalges weitestgehend ausgeschlossen. Jedoch ist die Einspannstelle für das Hebelauge am Kugelzapfenkonus ungeschützt.

Der DE-C-953 860 ist bereits ein gattungsgemäßes Gelenk für Lenkgestänge entnehmbar, dessen einteilig ausgebildete elastische Lagerschale einen Kugelkopf völlig umhüllt, wobei sie mit einem hülsenförmigen Ansatz im Gesamtbereich zwischen Kugelkopf und einem Hebelauge an einem Kugelzapfen anliegt. Ein zwischen Ansatz und Gelenkgehäuse ausgebildeter Ringspalt ermöglicht ein ungehindertes Schwenken des Kugelzapfens. Stirnseitig liegt der Ansatz an dem Hebelauge an, so daß Schmutz und Feuchtigkeit an einem Eindringen in die Lagerschale gehindert werden. Jedoch wird die Lagerschale bei einem Schwenken und/oder Verdrehen des Kugelzapfens im Gelenkgehäuse ungleichmäßig verformt, wobei sie zumindest bereichsweise von dem Hebelauge abhebt und womit eine Verminderung der Abdichtwirkung einhergeht.

Davon ausgehend liegt der Erfindung die **Aufgabe** zugrunde, eine einfache und sichere Dichtung für ein Kugelgelenk zu schaffen, die den Kugelzapfen zwischen Kugelkopf und Einspannstelle für das Hebelauge abdichtet.

Zur technischen **Lösung** dieser Aufgabe wird vorgeschlagen, daß der Randbereich des Ansatzes der Lagerschale seitlich vom Kugelzapfen abgespreizt ist, so daß er eine Dichtlippe bildet.

Bei dem erfindungsgemäßen Kugelgelenk ist also an die elastische Lagerschale ein hülsenförmiger Ansatz angeformt, der innen von Kugelzapfen geführt wird, wobei er den Kugelzapfen bis zur Einspannstelle für das Hebelauge umschließt und aufgrund seiner Elastizität dichtend gegen das Hebelauge drückt. Auf diese Weise werden sowohl der Grenzbereich zwischen Kugelzapfen und Lagerschale, als auch zwischen Kugelzapfen und Hebelauge vor eindringender Feuchtigkeit und nachfolgender Korrosion geschützt. Hierbei wird vorausgesetzt, daß das Hebelauge an seiner vom Gelenkgehäuse abgewandten Stirnseite mittels einer Mutter und ggfs. einer Dicht- bzw. Unterlegscheibe gesichert ist, wodurch auch auf dieser Seite der Grenzbereich zwischen Hebelauge und Kugelzapfen abgedichtet wird.

Der Kontakt- und Dichtbereich der Dichtlippe auf dem Hebelauge ist kreislinienförmig. Diese Form wird auch bei einem Verschwenken des Kugelzapfens beibehalten, da einerseits das Hebelauge keine Axialverschiebung der Dichtlippe ermöglicht und andererseits geringfügige Längenunterschiede durch die Abspreizung und Elastizität der Dichtlippe aufgefangen werden.

Bei einer Ausgestaltung der Erfindung ist vorgesehen, daß die Lagerschale einteilig ausgebildet ist und den Kugelkopf völlig umhüllt. Hierdurch wird ein Eindringen von Feuchtigkeit durch den Grenzbereich zwischen Gelenkgehäuse und Lagerschale bis zur Oberfläche des Kugelkopfes verhindert.

Bei einer weiteren Ausgestaltung ist vorgesehen, daß ein Ringspalt zwischen einer Durchtrittsöffnung des Gelenkgehäuses und dem hülsenförmigen Ansatz ein unbehindertes Schwenken des Ansatzes mit dem Kugelzapfen ermöglicht. Der Ansatz wird so vor übermäßigen mechanischen Belastungen geschützt, die zu einer Beeinträchtigung seiner Dichtwirkung führen könnten.

Bei einer praktischen Ausführungsform ist der umlaufende Spalt zwischen Dichtlippe, Kugelzapfen und Hebelauge mit einer Fettfüllung gefüllt, die ein Gleiten des Randbereiches auf dem Hebelauge ermöglicht und zusätzlich das Eindringen von Feuchtigkeit und Verunreinigungen verhindert. Hierbei macht sich die Erfindung die wasserabweisende Wirkung der Fettfüllung zunutze.

Bei einer weiteren Ausgestaltung besteht die elastische Lagerschale aus Gummi, wodurch ein ausreichender Korrosionsschutz insbesondere bei einem Einsatz des Kugelgelenkes in Kraftfahrzeugen erreicht wird. Mit einer Lagerschale aus Gummi lässt sich nämlich die im Bereich des hülsenförmigen Ansatzes erforderliche Elastizität erreichen. Ähnliche Ergebnisse sind auch mit einer elastischen Lagerschale aus einem Thermoplasten oder thermoplastischen Elastomeren erzielbar.

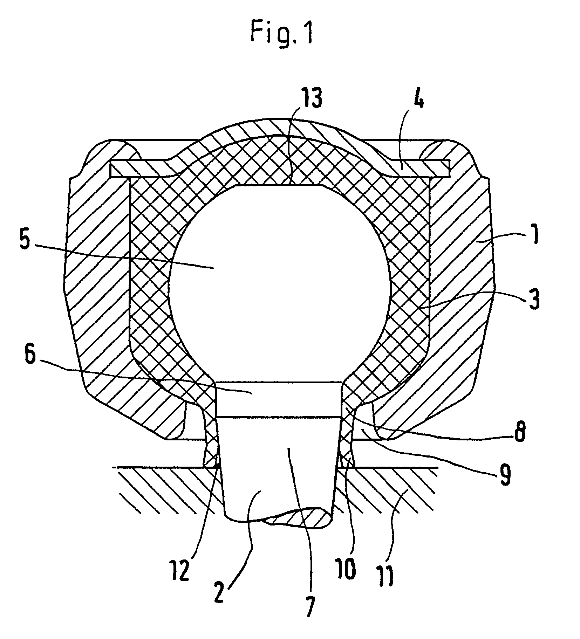

Weitere Einzelheiten und Vorteile des Gegenstandes der Erfindung ergeben sich aus der nachfolgenden Beschreibung der zugehörigen Zeichnung, die in der Fig. 1 eine bevorzugte Ausführungsform eines erfindungsgemäßen Kugelgelenkes im Längsschnitt zeigt.

Das Kugelgelenk hat ein topfförmiges Gelenkgehäuse 1, in dem ein Kugelzapfen 2 mittels einer Lagerschale 3 aus Gummi gelagert ist. Bei der Montage wird die Lagerschale 3 zunächst wie ein Socken über den Kugelzapfen 2 gezogen und ggfs. anvulkanisiert. Dann werden Kugelzapfen 2 und Lagerschale 3 in die große Öffnung des topfförmigen Gelenkgehäuses 1 eingeschoben und durch Festwalzen eines Gehäusedeckels 4 gesichert und vorgespannt.

Die Lagerschale 3 umschließt den Kugelzapfen 2 im Bereich von Kugelkopf 5, Kugelzapfenhals 6 und teilweise auch des Kugelzapfenkonus 7. Im Bereich von Kugelzapfenhals 6 und Kugelzapfenkonus 7 hat die Lagerschale 3 jedoch nur einen hülsenförmigen Ansatz 8, der in einer Durchtrittsöffnung 9 des Gelenkgehäuses 1 mit dem Kugelzapfen 2 verschwenkbar ist.

Der hülsenförmige Ansatz 8 weist einen abspreizbaren Rand auf, der eine Dichtlippe 10 bildet. Im Bereich der Dichtlippe 10 ist die Lagerschale 3 also nicht an den Kugelzapfen 2 anvulkanisiert. Die Dichtlippe 10 drückt gegen ein Hebelauge 11, welches zur Einleitung einer Kraft mit dem das Kugelgelenk verbunden ist. Hierdurch wird eine hermetische Abdichtung des Kugelzapfens 2 und der Einspannstelle für das Hebelauge 11 auf dem Kugelzapfenkonus 7 erzielt. Hierdurch wird insbesondere ein Festkorrodieren des Hebelauges 11 und eine Auflösung der Vulkanisationsverbindung verhindert.

Zur weiteren Steigerung der Dichtwirkung kann ein umlaufender Spalt 12 zwischen Dichtlippe 10 und Kugelzapfen 2 mit einer (hydrophoben) Fettfüllung versehen sein.

Eine Polkappe 13 des Kugelkopfes 5 begünstigt nicht nur dessen Herstellung, sondern in Verbindung mit der formschlüssig anliegenden Lagerschale 3 auch die Krafteinleitung beim Verschwenken des Kugelzapfens 2. Es ergibt sich also beim Verschwenken des Kugelzapfens auch eine Verformung der Lagerschaleninnenfläche, welche eine parallele Ausrichtung des hülsenförmigen Ansatzes 8 zum Kugelzapfen 2 und somit die Einhaltung konstanter Dichtbedingungen fördert.

Bezugszeichenliste

| | |
|---|---|
| 1 | Gelenkgehäuse |
| 2 | Kugelzapfen |
| 3 | Lagerschale |
| 4 | Gehäusedeckel |
| 5 | Kugelkopf |
| 6 | Kugelzapfenhals |
| 7 | Kugelzapfenkonus |
| 8 | Ansatz |
| 9 | Durchtrittsöffnung |
| 10 | Dichtlippe |
| 11 | Hebelauge |
| 12 | Spalt |
| 13 | Polkappe |

## Ansprüche

1. Kugelgelenk insbesondere für Radaufhängungen und Lenkgestänge von Kraftfahrzeugen, mit einem Kugelzapfen (2), dessen Kugelkopf (5) unter Zwischenlage einer elastischen Lagerschale (3) in einem Gelenkgehäuse (1) allseitig beweglich gelagert ist, wobei die Lagerschale (3) einen am Kugelzapfen (2) anliegenden hülsenförmigen Ansatz (8) aufweist, dessen Rand dichtend gegen ein auf dem Kugelzapfen befestigtes Hebelauge (11) drückt, **dadurch gekennzeichnet,** daß der Randbereich des Ansatzes (8) der Lagerschale (3) seitlich vom Kugelzapfen abgespreizt ist, so daß er eine Dichtlippe (10) bildet.

2. Kugelgelenk nach Anspruch 1, dadurch gekennzeichnet, daß die Lagerschale (3) einteilig ausgebildet ist und den Kugelkopf (5) völlig umhüllt.

3. Kugelgelenk nach einem der Ansprüche 1 bis 2, dadurch gekennzeichnet, daß ein Ringspalt zwischen einer Durchtrittsöffnung (9) des Gelenkgehäuses (1) und dem hülsenförmigen Ansatz (8) ein unbehindertes Schwenken des Ansatzes (8) mit dem Kugelzapfen (2) ermöglicht.

4. Kugelgelenk nach einem der Ansprüche 1 bis 3, dadurch gekennzeichnet, daß der umlaufende Spalt (12) zwischen Dichtlippe (10), Kugelzapfen (2) und Hebelauge (11) mit einer Fettfüllung gefüllt ist.

5. Kugelgelenk nach einem der Ansprüche 1 bis 4, dadurch gekennzeichnet, daß die elastische Lagerschale (3) aus Gummi besteht.

6. Kugelgelenk nach einem der Ansprüche 1 bis 5, dadurch gekennzeichnet, daß die elastische Lagerschale (3) aus einem Thermoplasten oder thermoplastischen Elastomeren besteht.

## Claims

1. Ball-and-socket joint, in particular for wheel suspensions and steering linkages of motor vehicles, having a ball pivot (2), the ball head (5) of which is mounted in a joint housing (1) so as to be movable in all directions with interposition of an elastic bearing shell (3), the bearing shell (3) having a sleeve-shaped shoulder (8) resting on the ball pivot (2), the edge of which shoulder presses in a sealing manner against a lever socket (11) attached to the ball pivot, characterized in that the edge region of the shoulder (8) of the bearing shell (3) is shored to the side of the ball pivot so that it forms a sealing lip (10).

2. Ball-and-socket joint according to Claim 1, characterized in that the bearing shell (3) is constructed in one part and encloses the ball head (5) completely.

3. Ball-and-socket joint according to one of Claims 1 to 2, characterized in that an annular gap between a passage opening (9) in the joint housing (1) and the sleeve-shaped shoulder (8) permits unimpeded swivelling of the shoulder (8) with the ball pivot (2).

4. Ball-and-socket joint according to one of Claims 1 to 3, characterized in that the circumferential gap (12) between the sealing lip (10), the ball pivot (2) and the lever socket (11) is filled with a grease filler.

5. Ball-and-socket joint according to one of Claims 1 to 4, characterized in that the elastic bearing shell (3) consists of rubber.

6. Ball-and-socket joint according to one of Claims 1 to 5, characterized in that the elastic bearing shell (3) consists of a thermoplastic or thermoplastic elastomers.

**Revendications**

1. Joint à rotule, en particulier pour des suspensions de roues et la timonerie de direction de véhicules automobiles, comportant un pivot de rotule (2) dont la tête de rotule (5) est montée, mobile de tous côtés, dans une boîte de joint (1), avec intercalation d'un coussinet de palier (3) élastique qui présente un appendice (8), en forme de douille, s'appliquant contre le pivot de rotule (2) et dont le bord exerce une pression, de manière étanche, contre un oeillet de levier (11) fixé sur le pivot de rotule, caractérisé en ce que la zone marginale de l'appendice (8) du coussinet de palier (3) est maintenue latéralement écartée du pivot de rotule, de manière à former une lèvre d'étanchéité (10).

2. Joint à rotule selon la revendication 1, caractérisé en ce que le coussinet de palier (3) est formé d'une seule pièce et entoure totalement la tête de rotule (5).

3. Joint à rotule selon la revendication 1 ou 2, caractérisé en ce qu'un espace annulaire, situé entre une ouverture de passage (9) de la boîte de joint (1) et l'appendice (8) en forme de douille, permet un libre pivotement de l'appendice (8) avec le pivot de rotule (2).

4. Joint à rotule selon l'une des revendications 1 à 3, caractérisé en ce que l'espace (12) continu, entre la lèvre d'étanchéité (10), le pivot de rotule (2) et l'oeillet de levier (11), est rempli de graisse.

5. Joint à rotule selon l'une des revendications 1 à 4, caractérisé en ce que le coussinet de palier (3) élastique est en caoutchouc.

6. Joint à rotule selon l'une des revendications 1 à 5, caractérisé en ce que le coussinet de palier (3) élastique est réalisé en une matière thermoplastique ou en des élastomères thermoplastiques.

## Fig.1